# EUROPEAN PATENT APPLICATION

(11) **EP 4 546 097 A1**
(43) Date of publication of application: **30.04.2025**
(21) Application number: 24173888.9
(22) Date of filing: 02.05.2024
(51) Int. Cl.: G06F 3/0481

(54) **SCREEN SPLITTING METHOD, ELECTRONIC APPARATUS, STORAGE MEDIUM**

(30) Priority: 23.10.2023 CN 202311378746
(71) Applicant: Beijing Xiaomi Mobile Software Co., Ltd., Beijing 100085 (CN)
(72) Inventor: LI, Jiayan, Beijing, 100085 (CN); YANG, Huiying, Beijing, 100085 (CN); LI, Siqi, Beijing, 100085 (CN)
(74) Representative: Stöckeler, Ferdinand

(57) **Abstract**

A screen splitting method includes: displaying a plurality of split screen windows on a display screen of an electronic apparatus, wherein the plurality of split screen windows includes a first split screen window and a second split screen window; and switching a first application interface displayed in the first split screen window to a first target interface in response to a first operation acting on the first split screen window, and maintaining display of a second application interface in the second split screen window, wherein the first target interface is different from an interface in an application program corresponding to the first application interface.

## Description

### FIELD

The present invention relates to the field of electronic apparatus display and operation, and more particularly, to a screen splitting method, an electronic apparatus, and a storage medium.

### BACKGROUND

In recent years, people have become accustomed to handling daily life tasks through electronic apparatuses such as mobile phones, tablets, and personal computer apparatuses. For electronic apparatuses with display functions, there are more and more requirements and scenarios for processing a plurality of events simultaneously on a same display screen of a single electronic apparatus. Therefore, many electronic apparatuses are equipped with a split-screen display mode to meet display and operation requirements.

### SUMMARY

According to a first aspect of embodiments of the present invention, a screen splitting method is provided. The screen splitting method includes: displaying a plurality of split screen windows on a display screen of an electronic apparatus, in which the plurality of split screen windows includes a first split screen window and a second split screen window; and switching a first application interface displayed in the first split screen window to a first target interface in response to a first operation acting on the first split screen window, and maintaining display of a second application interface in the second split screen window, in which the first target interface is different from an interface in an application program corresponding to the first application interface.

In some embodiments, switching the first application interface displayed in the first split screen window to the first target interface in response to the first operation acting on the first split screen window includes: switching the first application interface displayed in the first split screen window to a split-screen desktop interface in response to the first operation acting on the first split screen window, in which the split-screen desktop interface includes icons of a plurality of application programs in the electronic apparatus; or switching the first application interface displayed in the first split screen window to a first task presentation interface in response to the first operation acting on the first split screen window, in which the first task presentation interface is a presentation interface including a thumbnail window of at least one application program running in the background of the electronic apparatus; or switching the first application interface displayed in the first split screen window to a third application interface in response to the first operation acting on the first split screen window, in which the third application interface is an interface of the application program running in the background of the electronic apparatus.

In some embodiments, the first operation corresponding to the split-screen desktop interface includes: a sliding operation of taking a navigation bar displayed in the first split screen window as a starting point and sliding by a first preset distance or for a first preset duration toward a direction away from the navigation bar on the first split screen window.

In some embodiments, the first operation corresponding to the first task presentation interface includes: a sliding operation of taking a navigation bar displayed in the first split screen window as a starting point, sliding by a second preset distance or for a second preset duration toward a direction away from the navigation bar on the first split screen window and staying at a position after sliding for a preset first stay duration.

In some embodiments, the first operation corresponding to the third application interface includes: a sliding operation of taking a navigation bar displayed in the first split screen window as a starting point and sliding by a third preset distance or for a third preset duration along an extension direction of the navigation bar on the first split screen window.

In some embodiments, the screen splitting method further includes: adjusting a full-screen desktop interface displayed on the display screen to obtain the split-screen desktop interface.

In some embodiments, adjusting the full-screen desktop interface displayed on the display screen to obtain the split-screen desktop interface includes: adjusting a size of the full-screen desktop interface based on a size of the first split screen window to obtain the split-screen desktop interface, in case that the first split screen window and the second split screen window are distributed on the display screen in a target display ratio; or adjusting the first split screen window and the second split screen window based on the target display ratio, and adjusting the full-screen desktop interface based on the size of the adjusted first split screen window to obtain the split-screen desktop interface, in case that the first split screen window and the second split screen window are not distributed on the display screen in the target display ratio.

In some embodiments, the screen splitting method further includes: exiting split-screen display and displaying the first target interface in full screen on the display screen in response to a second operation acting on the second split screen window, in which the first target interface includes a split-screen desktop interface or a first task presentation interface.

In some embodiments, the screen splitting method further includes: switching the first target interface displayed in the first-split window to an application interface corresponding to an icon in the first target interface, in response to a third operation acting on the icon; or switching the first target interface displayed in the first-split window to an application interface corresponding to a thumbnail window in the first target interface, in response to a third operation acting on the thumbnail window.

In some embodiments, the screen splitting method further includes: displaying a second target interface in full screen on the display screen, in response to a fourth operation acting on a window partition bar between the first split screen window and the second split screen window.

In some embodiments, displaying the second target interface in full screen on the display screen, in response to the fourth operation acting on the window partition bar between the first split screen window and the second split screen window includes: exiting split-screen display and displaying a full-screen desktop interface on the display screen, in response to the fourth operation acting on the window partition bar; or exiting split-screen display and displaying a second task presentation interface in full screen on the display screen, in response to the fourth operation acting on the window partition bar; or exiting split-screen display and displaying a fourth application interface in full screen on the display screen, in response to the fourth operation acting on the window partition bar, in which the fourth application interface is an interface of an application program running in the background of the electronic apparatus.

In some embodiments, the fourth operation corresponding to the full-screen desktop interface includes: a sliding operation of taking the window partition bar as a starting point and sliding for a fourth preset duration or by a fourth preset distance along an extension direction of the window partition bar.

In some embodiments, the fourth operation corresponding to the second task presentation interface includes: a sliding operation of taking the window partition bar as a starting point, sliding by a fifth preset distance or for a fifth preset duration along an extension direction of the window partition bar and staying at a position after sliding for a second stay duration.

In some embodiments, the fourth operation corresponding to the fourth application interface includes: a sliding operation of taking an end of the window partition bar as a starting point and sliding by a sixth preset distance or for a sixth preset duration along a side edge intersecting with the window partition bar in the display screen.

In some embodiments, the screen splitting method further includes: floatingly displaying a shortcut application icon bar on the display screen, in response to a fifth operation acting on a window partition bar between the first split screen window and the second split screen window, in which the shortcut application icon bar covers at least a portion of the first split screen window and/or at least a portion of the second split screen window.

In some embodiments, the fifth operation includes: a sliding operation of taking an end of the window partition bar as a starting point and sliding by a seventh preset distance or for a seventh preset duration along an extension direction of the window partition bar.

According to a second aspect of embodiments of the present invention, a screen splitting device is provided. The screen splitting device at least includes: a display module configured to display a plurality of split screen windows on a display screen of an electronic apparatus, in which the plurality of split screen windows includes a first split screen window and a second split screen window; and a switching module configured to switch a first application interface displayed in the first split screen window to a first target interface in response to a first operation acting on the first split screen window, and maintain display of a second application interface in the second split screen window, in which the first target interface is different from an interface in an application program corresponding to the first application interface.

According to a third aspect of embodiments of the present invention, there is provided an electronic apparatus, at least including: a processor; and a memory for storing an instruction executable by the processor. The processor is configured to execute the screen splitting method according to the first aspect.

According to a fourth aspect of embodiments of the present invention, there is provided a non-transitory computer-readable storage medium having stored therein an instruction that, when executed by a processor of an electronic apparatus, causes the electronic apparatus to execute the screen splitting method according to the first aspect.

The technical solutions according to the embodiments of the present invention have the following beneficial effects.

Through the screen splitting method according to the present invention, when the display apparatus is in the split-screen display mode, the first application interface of the application program running in the first split screen window can be switched to another interface different from the application interface of this application program, allowing users to independently control the use of the application program in one split screen window without affecting interface display of another split screen window, meeting users' requirement of operating two application programs simultaneously and improving the practicality of the electronic apparatus. Moreover, compared to the related art that has to exit the split-screen display mode completely when closing an application program of the split screen window, users can operate the interface in the split screen window as using a full-screen interface, without need for additional understanding and learning costs of the split-screen display mode, improving the flexibility of the display screen and further enhancing user experience.

It should be understood that the general description above and the detailed description later are only illustrative and explanatory and do not limit the present invention.

### BRIEF DESCRIPTION OF DRAWINGS

The accompanying drawings, which are incorporated in and constitute a part of this specification, illustrate embodiments consistent with the disclosure and together with the description, serve to explain the principles of the disclosure.
Fig. 1 is a schematic diagram of a display interface of a display screen of an electronic apparatus in a split-screen display mode in the related art.
Fig. 2 is a schematic diagram of a full-screen desktop interface displayed on the display screen of the electronic apparatus when the electronic apparatus exits the split-screen display mode in the related art.
Fig. 3 is a flow chart of a screen splitting method according to an embodiment of the present invention.
Fig. 4 is a schematic interface diagram of a split-screen display mode according to an embodiment of the present invention.
Fig. 5 is a schematic interface diagram of split-screen display of a first split screen window and a second split screen window according to an embodiment of the present invention.
Fig. 6 is a schematic interface diagram of one split screen window according to an embodiment of the present invention.
Fig. 7a is a first schematic interface diagram of adjusting a split screen window to display a split-screen desktop interface according to an embodiment of the present invention.
Fig. 7b is a second schematic interface diagram of adjusting a split screen window to display a split-screen desktop interface according to an embodiment of the present invention.
Fig. 7c is a first schematic interface diagram of adjusting a display screen to display a full-screen desktop interface according to an embodiment of the present invention.
Fig. 7d is a second schematic interface diagram of adjusting a display screen to display a full-screen desktop interface according to an embodiment of the present invention.
Fig. 8a is a first schematic interface diagram of adjusting a split screen window to display a first task presentation interface according to an embodiment of the present invention.
Fig. 8b is a second schematic interface diagram of adjusting a split screen window to display a first task presentation interface according to an embodiment of the present invention.
Fig. 8c is a first schematic interface diagram of adjusting a display screen to display a first task presentation interface in full screen according to an embodiment of the present invention.
Fig. 8d is a second schematic interface diagram of adjusting a display screen to display a first task presentation interface in full screen according to an embodiment of the present invention.
Fig. 9a is a first schematic interface diagram of adjusting a split screen window to display an interface of an application program running in the background of an electronic apparatus according to an embodiment of the present invention.
Fig. 9b is a second schematic interface diagram of adjusting a split screen window to display an interface of an application program running in the background of an electronic apparatus according to an embodiment of the present invention.
Fig. 9c is a third schematic interface diagram of adjusting a split screen window to display an interface of an application program running in the background of an electronic apparatus.
Fig. 9d is a fourth schematic interface diagram of adjusting a split screen window to display an interface of an application program running in the background of an electronic apparatus.
Fig. 10 is a schematic interface diagram of switching a display interface of a split screen window in response to a third operation according to an embodiment of the present invention.
Fig. 11a is a third schematic interface diagram of adjusting a display screen to display a full-screen desktop interface according to an embodiment of the present invention.
Fig. 11b is a fourth schematic interface diagram of adjusting a display screen to display a full-screen desktop interface according to an embodiment of the present invention.
Fig. 12a is a first schematic interface diagram of adjusting a display screen to display a second task presentation interface in full screen according to an embodiment of the present invention.
Fig. 12b is a second schematic interface diagram of adjusting a display screen to display a second task presentation interface in full screen according to an embodiment of the present invention.
Fig. 13a is a first schematic interface diagram of adjusting a display screen to display an interface of an application program running in the background of an electronic apparatus in full screen according to an embodiment of the present invention.
Fig. 13b is a second schematic interface diagram of adjusting a display screen to display an interface of an application program running in the background of an electronic apparatus in full screen according to an embodiment of the present invention.
Fig. 13c is a third schematic interface diagram of adjusting a display screen to display an interface of an application program running in the background of an electronic apparatus in full screen.
Fig. 13d is a fourth schematic interface diagram of adjusting a display screen to display an interface of an application program running in the background of an electronic apparatus in full screen.
Fig. 14a is a first schematic interface diagram of floatingly displaying a shortcut application icon bar according to an embodiment of the present invention.
Fig. 14b is a second schematic interface diagram of floatingly displaying a shortcut application icon bar according to an embodiment of the present invention.
Fig. 14c is a third schematic interface diagram of floatingly displaying a shortcut application icon bar according to an embodiment of the present invention.
Fig. 15a is a first schematic interface diagram of floatingly displaying a shortcut application icon bar in a split-screen display mode according to an embodiment of the present invention.
Fig. 15b is a second schematic interface diagram of floatingly displaying a shortcut application icon bar in a split-screen display mode according to an embodiment of the present invention.
Fig. 15c is a third schematic interface diagram of floatingly displaying a shortcut application icon bar in a split-screen display mode according to an embodiment of the present invention.
Fig. 15d is a fourth schematic interface diagram of floatingly displaying a shortcut application icon bar in a split-screen display mode according to an embodiment of the present invention.
Fig. 15e is a fifth schematic interface diagram of floatingly displaying a shortcut application icon bar in a split-screen display mode according to an embodiment of the present invention.
Fig. 15f is a sixth schematic interface diagram of floatingly displaying a shortcut application icon bar in a split-screen display mode according to an embodiment of the present invention.
Fig. 16 is a schematic diagram of a screen splitting device according to an embodiment of the present invention.
Fig. 17 is a block diagram of an electronic apparatus according to an embodiment of the present invention.

### DETAILED DESCRIPTION

Embodiments of the present invention are described in detail below, and examples of the embodiments are shown in accompanying drawings. In the description with reference to the drawings, unless otherwise indicated, the same numbers in different drawings indicate the same or similar elements. Embodiments described below do not represent all possible embodiments consistent with the present invention. Instead, they are only examples of devices and methods consistent with some aspects of the present invention as detailed in the attached claims.

The split-screen display mode is one of the main functional modes in a multi-window function of the display screen. Currently, the split-screen display mode tends to bind two split screen windows into a combination for use, which is less flexible than a full-screen display mode and causes additional learning and cognitive costs for users. In order to overcome the problems existing in the related art, the present invention provides a screen splitting method and device, an electronic apparatus, and a storage medium. Through the screen splitting method according to the present invention, it is possible to realize independent control over the use of an application program in one split screen window without affecting interface display of another split screen window, when a display apparatus is in a split-screen display mode, which improves usage effect of the split-screen display mode of the electronic apparatus.

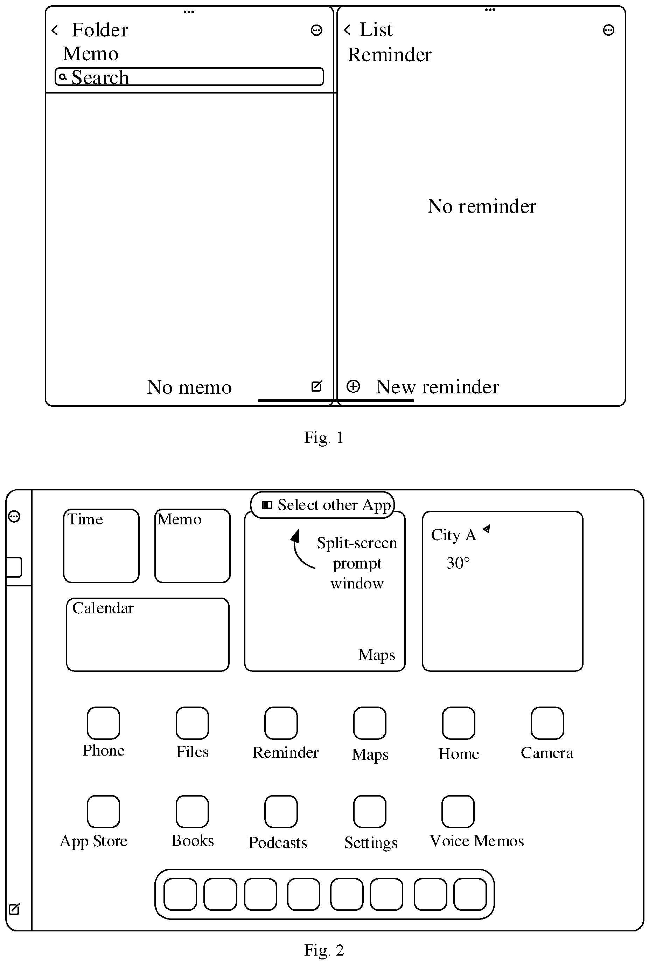

Fig. 1 is a schematic diagram of a display interface of a display screen of an electronic apparatus in a split-screen display mode in the related art. Fig. 2 is a schematic diagram of a full-screen desktop interface displayed on the display screen of the electronic apparatus when the electronic apparatus exits the split-screen display mode in the related art. As shown in Fig. 1, two application windows are bound into a combination in a split-screen display mode. At this time, there is a shared navigation bar below the display screen that occupies a portion of the bottom area of the two application windows. After acting on the shared navigation bar and sliding up, application programs of the two application windows are exited together and returned to the full-screen desktop interface shown in Fig. 2. That is to say, in the existing split-screen display mode, the two applications displayed separately in split screen windows are in a combination relationship and can only be exited together, while cannot be exited individually for an application in a split screen window.

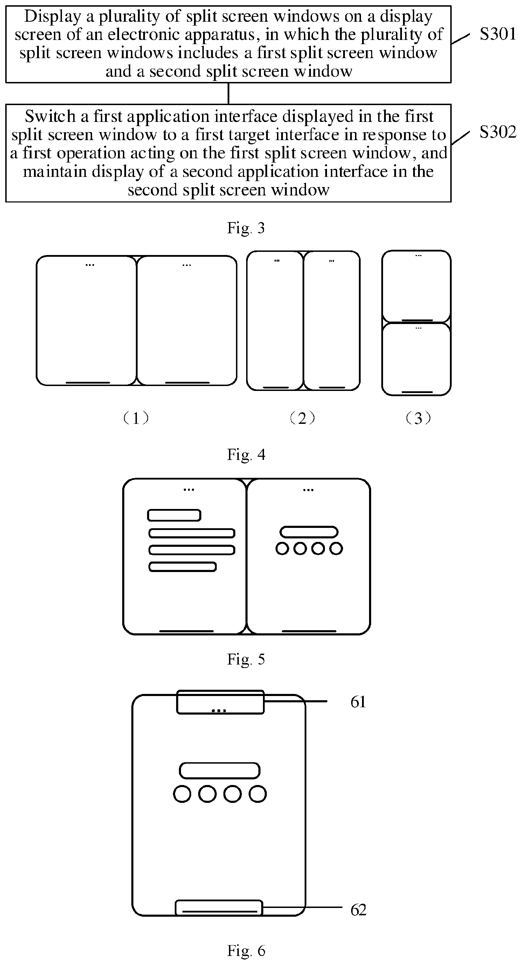

In order to overcome the above problem, the present invention provides a screen splitting method. Referring to Fig. 3, Fig. 3 is a flow chart of a screen splitting method according to an embodiment of the present invention. As shown in Fig. 3, the screen splitting method according to the present invention can be implemented by: step S301, displaying a plurality of split screen windows on a display screen of an electronic apparatus, in which the plurality of split screen windows includes a first split screen window and a second split screen window; and step S302, switching a first application interface displayed in the first split screen window to a first target interface in response to a first operation acting on the first split screen window, and maintaining display of a second application interface in the second split screen window, in which the first target interface is different from an interface in an application program corresponding to the first application interface.

Here, the split screen method according to the present invention is applied to an electronic apparatus with a display function. When the electronic apparatus is disposed in a split screen display mode i.e., when the display screen of the electronic apparatus displays a plurality of split screen windows, an application interface of an application program running in one split screen window is controlled individually to switch to other interfaces that do not belong to the application program, i.e., the application program running in one split screen window is closed individually without affecting original application programs running of other split screen windows, which improves usage effect of the split-screen display mode of the electronic apparatus.

It should be noted that the electronic apparatus applied by the screen splitting method according to the present invention includes but is not limited to a mobile terminal, a fixed terminal, or a portable electronic apparatus. The mobile terminal includes but is not limited to a mobile phone, a tablet, a personal computer apparatus, etc. The fixed terminal includes but is not limited to a television, a vehicle terminal, etc. The portable electronic apparatus includes but is not limited to a smart watch.

In step S301, the electronic apparatus activates the split-screen display mode and a plurality of split screen windows are displayed on the display screen. The plurality of split screen windows are separated by window partition bars. Different split screen windows display corresponding application interfaces respectively. It should be noted that different split screen windows display different application interfaces from different application programs when the split-screen display mode is activated.

In the embodiments of the present invention, the split-screen display mode above-mentioned can be activated through various methods such as touch the display screen, touch a button of the electronic apparatus, voice wake-up, or gesture control.

In some examples, the split-screen display mode can be activated through a split-screen prompt window on the display screen. Here, based on the split-screen prompt window, select the two application icons displayed on the display screen to trigger the display screen to display two split screen windows, and display respectively one application interface in the application program corresponding to one application icon in the two split screen windows. Here, selecting a plurality of icons simultaneously to activate a plurality of windows also applies. As shown in Fig. 2, when the display screen displays a desktop interface, the split-screen prompt window can be automatically displayed or called up through settings. In other examples, the split-screen display mode can be activated through a shortcut gesture operation or triggering a virtual shortcut key. In some other examples, the split-screen display mode can also be activated by wake-up words. For example, the wake-up words are displaying application A, application B, and application C in split screen.

Referring to Fig. 4, Fig. 4 is a schematic interface diagram of a split-screen display mode according to an embodiment of the present invention. In the present invention, when displaying two split screen windows, it can be in a split-screen mode of horizontal screen or a split-screen mode of vertical screen. Fig. 4 (1), Fig. 4 (2), and Fig. 4 (3) respectively show the interface forms of display screens of different sizes displaying two split screen windows. Here, the two split screen windows illustrated in Fig. 4 (1) can be two split screen windows of a display screen of a tablet computer or two split screen windows of a foldable display screen. At this time, the two split screen windows are displayed on different folding parts of the foldable screen. Fig. 4 (2) illustrates the interface form of the display screen forming two split screen windows in the split-screen mode of vertical scree. As shown in Fig 4 (1), Fig 4 (2), and Fig 4 (3), the two split screen windows can be the first split screen window and the second split screen window, which are separated by a window partition bar.

It should be noted that when the first split screen window and the second split screen window in the present invention are both one split screen window, the sizes of which can be the same or different. That is to say, the first split screen window and the second split screen window can be displayed on the display screen in a 1:1 display ratio and can also be displayed on the display screen in other display ratios such as a 2:1 display ratio, which is not limited in the present invention. When there is one first split screen window and a plurality of second split screen windows in the present invention, the first split screen window and a plurality of second split screen windows can also be displayed on the display screen in a preset split-screen ratio, such as a 1:1:1 display ratio, and can also be displayed in other split-screen ratios, which is not limited in the present invention.

In step S302, when the first operation acts on the first split screen window, the first application interface displayed in the current first split screen window is switched to the first target interface, and the display of the second application interface in the second split screen window (one or more) is maintained.

It should be noted that the maintaining the display of the second application interface of the second split screen window according to the present invention is represented that the application program activated in the second application window runs normally, and the display content of the second application interface currently being displayed by the application program is not affected by the first operation and can still be displayed normally.

Here, the first operation proposed in the present invention is the operation of triggering the first split screen window to exit the application program running in the first split screen window. When responding to the first operation, the first split screen window exits the running application program or switches the application program to run in the background, and the first target interface is displayed in the first split screen window. Here, the first target interface can be the application interface in another application program, and can also not be the application interface of an application program, such as a system setting interface, a desktop interface, etc.

Here, the first operation includes a touch operation, a voice operation, or a gesture operation acting on the electronic apparatus. For example, when the first application interface is a preview interface of the camera application program, the first operation can be a shortcut operation acting on a side button of the electronic apparatus, such as a long operation of long pressing the power button. At this time, the camera is activated to take photos and switched to an image display interface of an album application program. For example, the first operation can also be the voice operation. When the first application interface is a chat interface of a social application program and a telephone pop-up window is received, the first application interface is switched to a phone answering interface by collecting a user's voice as "answer the phone".

In embodiments of the present invention, when the first application interface is displayed in the first split screen window, it can respond to a fifth operation acting on the first split screen window to adjust the display content in the first application interface or switch the first application interface to other application interfaces of the application program running in the first split screen window. For example, responding to act on a return key on the first application interface, the first application interface is switched to an upper grade application interface of the application program running in the first split screen window.

Thus, according to the screen splitting method according to the present invention, it is possible to switch the first application interface of the application program running in the first split screen window to another interface different from the application interface of the application program when the display apparatus is disposed in the split-screen display mode, allowing users to independently control the use of the application program in one split screen window without affecting interface displays of other split screen windows, meeting the user's usage need to operate two application programs simultaneously and improving the practicality of electronic apparatuses. Moreover, compared to only being able to exit the split-screen display mode integrally when closing an application program of the split screen window, users can operate the interface in the split screen window as using a full-screen interface, without paying for additional understanding cost and learning cost of the split-screen display mode, improving the flexibility of the display screen and further enhancing user experience.

In some embodiments, switching the first application interface displayed in the first split screen window to the first target interface in response to the first operation acting on the first split screen window includes: switching the first application interface displayed in the first split screen window to a split-screen desktop interface in response to the first operation acting on the first split screen window, in which the split-screen desktop interface includes icons of a plurality of application programs in the electronic apparatus; or switching the first application interface displayed in the first split screen window to a first task presentation interface in response to the first operation acting on the first split screen window, in which the first task presentation interface is a presentation interface including a thumbnail window of at least one application program running in the background of the electronic apparatus; or switching the first application interface displayed in the first split screen window to a third application interface in response to the first operation acting on the first split screen window, in which the third application interface is an interface of the application program running in the background of the electronic apparatus.

In the present invention, the first target interface may be a split-screen desktop interface. The first operation acting on the first split screen window can exit the application program currently running in the first split screen window i.e., close the first application interface, and switch to the split-screen desktop interface.

With respect to embodiments of the present invention, refer to Fig. 5 and Fig. 6. Fig. 5 is a schematic interface diagram of split-screen display of a first split screen window and a second split screen window according to an embodiment of the present invention. Fig. 6 is a schematic interface diagram of one split screen window according to an embodiment of the present invention. Here, as shown in Fig. 5 and Fig. 6, the split screen window in Fig. 6 can be the first split screen window and the second split screen window in Fig. 5. Here, each split screen window is equipped with a window controller and a navigation bar. As shown in Fig. 6, the window controller and the navigation bar are spaced at both ends of the split screen window. In some embodiments, in conjunction with Fig. 6, a window controller 61 can be disposed at the top of the split screen window, and a navigation bar 62 can be disposed at the bottom of the split screen window.

Here, the window controller can be a function column that operates an interface display (the first application interface, the first target interface, or other interfaces) in a split screen window (such as in the first split screen window). This function column can include a close button, a return button and so on. The close button can close the first application interface and return to the split-screen desktop interface. The return button can return to an upper grade interface of the application program corresponding to the first application interface of the first split screen window, or close the running application and return to the split-screen desktop interface when the first application interface is the main application interface of the corresponding application program. Here, the first operation can be in response to a touch on the close button in the window controller, or in response to a touch on the return button in the window controller when the first application interface is the main application interface of the corresponding application program.

It should be noted that the function column further has a window control button, such as a function button for creating a new split screen window, and a function key for displaying a small window of the split screen window and so on.

In the present invention, a first navigation bar may be strip-shaped or circular, which is not limited in the present invention. Taking a strip-shaped navigation bar as an example, the navigation bar extends horizontally at the bottom of the split screen window and is parallel to the side edge of the bottom of the split screen window. The application program running in the split screen window can be exited or switched to run in the background in response to the first operation acting on the first navigation bar.

In some embodiments, the first operation corresponding to the split-screen desktop interface includes: a sliding operation of taking a navigation bar displayed in the first split screen window as a starting point and sliding by a first preset distance or for a first preset duration toward a direction away from the navigation bar on the first split screen window.

Here, users can take any position on the navigation bar as the starting point and slide towards a direction away from the bottom of the first split screen window (i.e., away from the navigation bar). Here, the direction away from the navigation bar is the direction that intersects with the extension direction of the navigation bar, for example, at a 90-degree angle to the extension direction of the navigation bar.

The first preset distance or the first preset duration in the present invention can be preset by developers or set by users on the setting interface according to usage habits. Here, the first preset distance is less than the length of the side edge that intersects with the bottom of the split screen window. In some embodiments, the first preset distance is half the length of the side edge that intersects with the bottom of the split screen window and can also be 2/3 of the length of the side edge that intersects with the bottom of the split screen window. The first preset duration can be 2s or 1s, which is not limited in the present invention.

It should be noted that the first operation corresponding to the split-screen desktop interface is revoked after sliding the first preset distance or sliding the first preset duration, i.e., the user's fingers leave the display screen.

In some embodiments, the first operation includes starting from the center of the navigation bar, moving to the center of the screen towards the direction perpendicular to the navigation bar, and then leaving the display screen.

Embodiments of the present invention can exit the application program in the first split screen window and switch to the desktop interface by sliding the first preset distance or sliding the first preset duration toward a direction away from the navigation bar on the first split screen window. The operation is simple and convenient, improving the flexibility and practicality of the split-screen display mode.

In some embodiments, the screen splitting method according to the present invention further includes: adjusting a full-screen desktop interface displayed on the display screen to obtain the split-screen desktop interface.

Here, the full-screen display desktop of the display screen is a main desktop of the display screen when the electronic apparatus does not activate the split-screen display mode. In combination with Fig. 2, Fig. 2 shows a full-screen display desktop. When the first application interface is closed in response to the first operation, the full-screen display interface is adjusted to obtain the split-screen desktop interface, and the split-screen desktop interface is display in the first split screen window.

Here, adjusting the full-screen desktop interface includes adjusting the size and adjusting icons distributed on the full-screen desktop interface. The icon distributed on the full-screen desktop interface can be used to mark an application program, and a touch on the icon can activate a main application page or one of application interfaces.

In some examples, the display ratio of the split screen window is fixed, or only adjusted by user pulling the window partition bar between split screen windows. At this time, in response to the first operation, the size of the full-screen desktop interface can be adjusted to fit the size of the first split screen window to obtain the split-screen desktop interface according to the size of the first split screen window. Here, the icons are reduced and distributed on the split-screen desktop interface in an original arrangement mode in the present invention, or the icons are reduced and distributed on the split-screen desktop after rearranged. Here, the icons in the full-screen desktop interface can be fully displayed on the split-screen desktop interface or partially displayed on the split-screen desktop interface.

In some embodiments, based on the display ratio of the first split screen window and the second split screen window (1:3), a 12cm*10cm full-screen desktop interface is adjusted to a 6cm*5cm split-screen desktop interface. Here, the size of the icons is also reduced at a ratio of 1:3 and distributed on the split-screen desktop interface in the original arrangement mode.

In the present invention, by responding to the first operation for the first split screen window, it is possible to adjust the full-screen desktop interface and return to the split-screen desktop interface in the first split screen window while maintaining the interface display of the second split screen window. So that users can operate the split-screen desktop interface individually as using the full-screen desktop interface, improving user experience.

In other examples, the display ratio of the split screen window can be freely adjusted by the first operation from user, but only the size of the second split screen window is adjusted to maintain the display content of the application interface in the second split screen window.

In some embodiments, adjusting the full-screen desktop interface displayed on the display screen to obtain the split-screen desktop interface includes: adjusting a size of the full-screen desktop interface based on a size of the first split screen window to obtain the split-screen desktop interface, in case that the first split screen window and the second split screen window are distributed on the display screen in a target display ratio; or adjusting the first split screen window and the second split screen window based on the target display ratio, and adjusting the full-screen desktop interface based on the size of the adjusted first split screen window to obtain the split-screen desktop interface, in case that the first split screen window and the second split screen window are not distributed on the display screen in the target display ratio.

Here, the target display ratio is set by developers or can be set separately by users on the settings interface according to user habits, which is not limited in the present invention. In some embodiments, when both the first split screen window and the second split screen window have one, the target display ratio can be 1: 1.

In some examples, the system saves a full-screen desktop interface that adapts to the display screen in full screen and a split-screen desktop that adapts to half of the display screen. Here, the split-screen display desktop that adapts to half of the display screen is based on adjusting the full-screen desktop interface. In the present invention, the full-screen display interface can be a horizontal screen interface, and in this case, the split-screen display interface is a vertical screen interface. The full-screen display interface and the split-screen display interface can both be horizontal screen interface or vertical screen interface, which are not limited in the present invention.

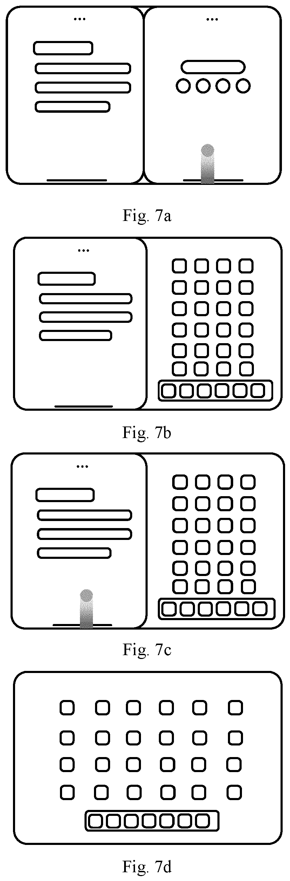

Referring to Fig. 7a to Fig.7d, Fig. 7a is a first schematic interface diagram of adjusting a split screen window to display a split-screen desktop interface according to an embodiment of the present invention; Fig. 7b is a second schematic interface diagram of adjusting a split screen window to display a split-screen desktop interface according to an embodiment of the present invention; Fig. 7c is a first schematic interface diagram of adjusting a display screen to display a full-screen desktop interface according to an embodiment of the present invention; Fig. 7d is a second schematic interface diagram of adjusting a display screen to display a full-screen desktop interface according to an embodiment of the present invention.

As shown in Fig. 7a and Fig. 7b, when the electronic apparatus activates the split-screen display mode and the first split screen window and the second split screen window are displayed on the display screen in a target display ratio of 1:1 by default, if the first operation is to take the bottom endpoint of the navigation bar of the first split screen window as the starting point, move towards the direction perpendicular to the extension of the navigation bar to the center of the screen and leave the display screen, the first application interface in the first split screen window is closed at this time, and the split-screen desktop interface saved by the system is called to display in the first split screen window.

Here, if the first split screen window and the second split screen window are not distributed on the display screen in the target display ratio during use, and if the first operation is to take the center of the navigation bar of the first split screen window as the starting point, move towards the direction perpendicular to the navigation bar to the center of the screen and leave the display screen, the first split screen window and the second split screen window are adjusted to the target display ratio, and then the split-screen desktop interface saved by the system is called to display in the first split screen window.

In other embodiments, it can also ignore the current display ratio when exiting the first application interface in response to the first operation, and directly adjust the full-screen desktop interface according to the size of the first split screen window (including adjusting the size of the desktop interface, the size and arrangement mode of icons). So that the adjusted split-screen desktop interface adapts to display in the first split screen window. Here, the icons of the full-screen desktop interface can be fully or partially displayed in the split-screen desktop interface.

In embodiments of the present invention, when the split screen window returns to the desktop interface, the split-screen desktop interface can be displayed after being restored to the target display ratio, allowing users to use the-split screen desktop interface with a more suitable display area for needs and improving user experience. In practical implementation, the size of the split screen window corresponding to the target display ratio is fixed, so the split-screen desktop interface can be stored in the system in advance. The computational complexity of page update can be reduced and the response rate of page switching can be improved.

In the present invention, the first target interface can be the first task presentation interface, which is a presentation interface including a thumbnail window of at least one application program running in the background of the electronic apparatus. Each thumbnail window corresponds to an application program running in the background, and the content in the thumbnail window is a screenshot interface of the application at the time of exiting the foreground. A plurality of thumbnail windows can form the first task presentation interface through parallel distribution, and can also form the first task presentation interface by layering and covering. Here, a plurality of thumbnail windows are arranged in the timestamp order of corresponding application programs exiting the foreground. The first operation acting to the first split screen window can also exit the application program currently running in the first split screen window, i.e., closing the first application interface and switching to the first task presentation interface.

In some embodiments, the first operation corresponding to the first task presentation interface includes: a sliding operation of taking a navigation bar displayed in the first split screen window as a starting point, sliding by a second preset distance or for a second preset duration toward a direction away from the navigation bar on the first split screen window and staying at a position after sliding for a preset first stay duration.

Here, users can take any position on the navigation bar as the starting point and slide towards the direction away from the bottom of the first split screen window (i.e., away from the navigation bar). Here, the direction away from the navigation bar is the direction that intersects with the extension direction of the navigation bar, for example, at a 90-degree angle to the extension direction of the navigation bar.

The second preset distance or the second preset duration in the present invention can be preset by developers or set by users on the setting interface according to usage habits. Here, the second preset distance can be the same or different from the first preset distance. The second preset duration can also be the same or different from the first preset duration.

In the present invention, the second preset distance is less than the length of the side edge that intersects with the bottom of the split screen window. In some embodiments, the second preset distance is half the length of the side edge that intersects with the bottom of the split screen window, and can also be 1/3 of the length of the side edge that intersects with the bottom of the split screen window. The first preset duration can be 1s or 0.5s, which is not limited in the present invention.

Here, the first stay duration can be preset by developers or set by users on the setting interface according to usage habits. In some embodiments, the first stay duration can be between 0.4s and 0.8s.

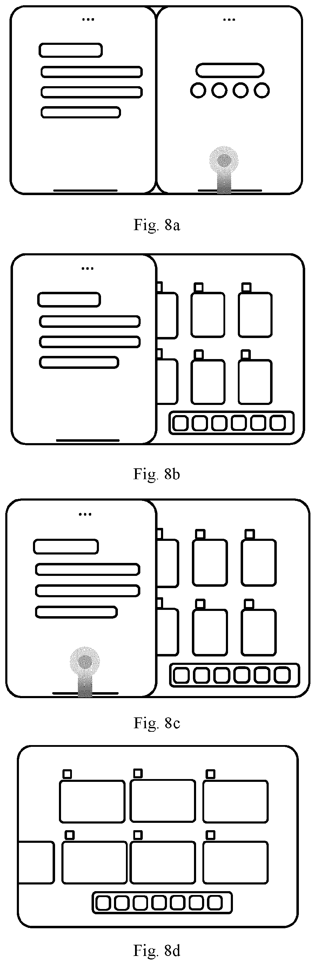

Referring to Fig. 8a to Fig. 8d, Fig. 8a is a first schematic interface diagram of adjusting a split screen window to display a first task presentation interface according to an embodiment of the present invention; Fig. 8b is a second schematic interface diagram of adjusting a split screen window to display a first task presentation interface according to an embodiment of the present invention; Fig. 8c is a first schematic interface diagram of adjusting a display screen to display a first task presentation interface in full screen according to an embodiment of the present invention; Fig. 8d is a second schematic interface diagram of adjusting a display screen to display a first task presentation interface in full screen according to an embodiment of the present invention.

In some embodiments, as shown in Fig. 8a and Fig. 8b, if the first operation is to take the bottom endpoint of the navigation bar of the first split screen window as the starting point, move in a direction perpendicular to the extension of the navigation bar to the center of the screen and stay on the display screen for 0.5s, the first application interface in the first split screen window is closed at this time, and the first task presentation interface including thumbnail windows corresponding to a plurality of application programs running in the background is called.

Embodiments in the present invention can exit the application program in the first split screen window by sliding the second preset distance or sliding the second preset duration towards the direction away from the navigation bar on the first split screen window, and switch to the first task presentation interface display based on the operation of staying on the display screen for the first preset duration, which makes the operation for page switching simple and convenient, improves the flexibility and practicality of the split-screen display mode, and effectively broadens application scenarios of the split-screen display mode.

In the present invention, the first target interface can be an application interface of application programs running in the background of the electronic apparatus. Here, the application programs running in the background can be one or more. When there are a plurality of application programs running in the background, the first target interface switched is an application interface of the recently used background application programs. The first operation on the first split screen window can exit the application program currently running in the first split screen window, i.e., close the first application interface, and switch to the interface of an application program running in the background of the electronic apparatus.

In some embodiments, the first operation corresponding to the third application interface includes: a sliding operation of taking a navigation bar displayed in the first split screen window as a starting point and sliding by a third preset distance or for a third preset duration along an extension direction of the navigation bar on the first split screen window.

Here, users can take any position on the navigation bar as the starting point. Sliding along the extension direction of the navigation bar refers to dragging the navigation bar to slide horizontally. It is possible to drag the navigation bar to slide left or right. It should be noted that when the navigation bar is dragged to the left, an application interface of an application program recently exited and running in the background is called. When wanting to return to the first application interface within a preset waiting time after sliding to the left, it can be achieved by right sliding the navigation bar, so that a convenient and efficient application fast switching can be achieved.

In the present invention, the third preset distance or the third preset duration can be preset by developers or set by users on the setting interface according to usage habits. Here, the third preset distance can be the same or different from the first preset distance or the second preset distance. Correspondingly, the third preset duration can be the same or different from the first preset duration or the second preset duration.

In this disclosure, the third preset distance is less than the length of the bottom side edge of the split screen window where the navigation bar is located. In some embodiments, the second preset distance is half the length of the bottom side edge of the split screen window, and can also be 2/3 of the length of the bottom side edge of the split screen window. The third preset duration can be 0.8s or 0.5s, which is not limited in the present invention.

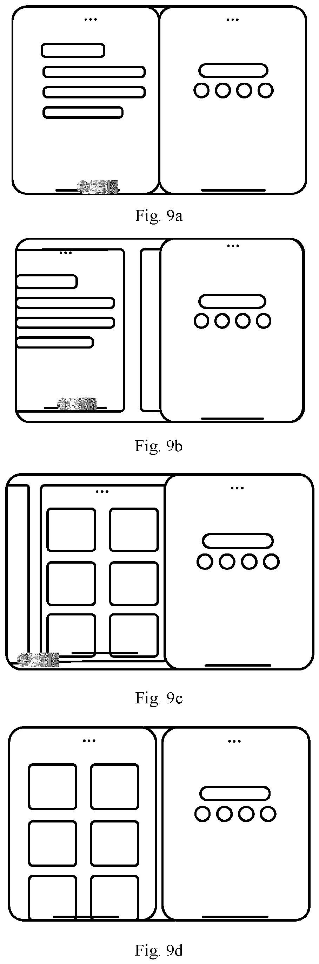

Referring to Fig. 9a to Fig.9d, Fig. 9a is a first schematic interface diagram of adjusting a split screen window to display an interface of an application program running in the background of an electronic apparatus according to an embodiment of the present invention; Fig. 9b is a second schematic interface diagram of adjusting a split screen window to display an interface of an application program running in the background of an electronic apparatus according to an embodiment of the present invention; Fig. 9c is a third schematic interface diagram of adjusting a split screen window to display an interface of an application program running in the background of an electronic apparatus; Fig. 9d is a fourth schematic interface diagram of adjusting a split screen window to display an interface of an application program running in the background of an electronic apparatus.

In some embodiments, as shown in Fig. 9a to Fig. 9d, if the first operation is to take the bottom endpoint of the navigation bar of the first split screen window as the starting point and slide along the extension direction of the navigation bar to the end of the bottom side edge, the first application interface in the first split screen window is closed at this time, and the application interface of the application program recently running in the background is called. It should be noted that when two application interfaces displayed in split-screens recently have recently exited simultaneously, an application interface distributed on a right side (or a left side) should be called with preference.

Embodiments in the present invention can exit the first application interface in the first split screen window and switch to an application interface of the application program in the background by dragging the navigation bar to slide the third preset distance or slide the third preset duration in the horizontal direction on the first split screen window, which makes the operation for page switching simple and convenient, improves the flexibility and practicality of the split-screen display mode, and effectively broadens application scenarios of the split-screen display mode.

It should be noted that the first operation above in the present invention can be preset by developers or can be set separately on the setting interface of the display screen according to the user's usage habits, i.e., the first operations corresponding to adjusting the split-screen desktop interface, the first task presentation interface, and the interface of the application program running in the background in different cases can be exchanged, which are not limited in the present invention.

In some embodiments, the screen splitting method further includes: exiting split-screen display and displaying the first target interface in full screen on the display screen in response to a second operation acting on the second split screen window, in which the first target interface includes a split-screen desktop interface or a first task presentation interface.

Here, when the first target interface displayed in the first split screen window according to the present invention is the split-screen desktop interface, and the second operation is the operation to switch the split-screen desktop interface, the split-screen display mode is exited and the full-screen desktop interface is displayed in full screen on the display screen. When the first split screen window according to the present invention is the first task presentation interface, and the second operation is the operation to switch the first task presentation interface, the split-screen display mode is exited and an updated first task presentation interface is displayed in full screen on the display screen. Here, the updated first task interface includes the thumbnail window corresponding to the second application interface exited from the second split screen window.

In the present invention, the second operation can have the same or different steps as the first operation acting on the first split screen window. Here, the second operation can be acted on a close button in the window controller at the top of the second split screen window, or can be taking the navigation bar displayed in the second split screen window as a starting point, sliding the first preset distance or sliding the first preset duration toward a direction away from the navigation bar on the second split screen window, or can be taking the navigation bar displayed in the second split screen window as a starting point, sliding the second preset distance or sliding the second preset duration toward a direction away from the navigation bar on the second split screen window and staying at the position after sliding for the preset first stay duration.

In some embodiments, in combination with Fig. 7c and Fig.7d, if the second operation is to take the bottom endpoint of the navigation bar of the second split screen window as the starting point, move towards the direction perpendicular to the navigation bar to the center of the screen and leave the display screen, the second application interface in the second split screen window is closed at this time, and the full-screen desktop interface is displayed in full screen on the display screen. In combination with Fig. 8c and Fig.8d, if the second operation is to take the bottom endpoint of the navigation bar of the second split screen window as the starting point, move towards the direction perpendicular to the navigation bar to the center of the screen and stay on the display screen for 0.5s, the second application interface in the second split screen window is closed at this time, and the updated first task presentation interface is displayed in full screen on the display screen.

Embodiments in the present invention can return to the full-screen desktop interface or enter the first task presentation interface when a plurality of split screen windows exit the use of corresponding application programs, which can meet user's actual usage state and improve the practicality of electronic apparatuses.

In some embodiments, the screen splitting method further includes: switching the first target interface displayed in the first-split window to an application interface corresponding to an icon in the first target interface, in response to a third operation acting on the icon; or switching the first target interface displayed in the first-split window to an application interface corresponding to a thumbnail window in the first target interface, in response to a third operation acting on the thumbnail window.

Here, the third operation can be a touch operation on the display screen, such as single-click touch operation on icons/thumbnail windows, long-click touch operation or double-click touch operation, etc. It can also be a selecting operation on icons through voice, gesture, etc.

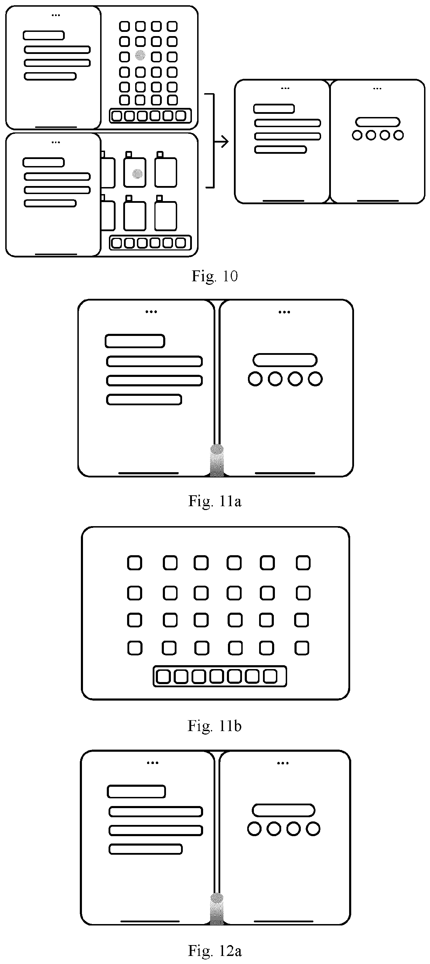

Referring to Fig. 10, Fig. 10 is a schematic interface diagram of switching a display interface of a split screen window in response to a third operation according to an embodiment of the present invention. As shown in Fig. 10, in response to the click operation on the icon, an application interface corresponding to the icon can be opened in the split-screen desktop interface displayed in the first split screen window; alternatively, in response to the click operation on the thumbnail window, the application program running in the background corresponding to the icon can be opened and display the corresponding application interface in the first task presentation interface displayed in the first split screen window.

Embodiments of the present invention can close, replace, and reopen an application in the first split screen window, achieving the independent control to the first split screen window and enhancing user experience.

In some embodiments, the screen splitting method further includes: displaying a second target interface in full screen on the display screen, in response to a fourth operation acting on a window partition bar between the first split screen window and the second split screen window.

In embodiments of the present invention, there is a window partition bar between every two adjacent split screen windows in a plurality of split screen windows, which is configured to separate page displays between the adjacent split screen windows. Here, when the window partition bar is applied at any position other than the endpoint and dragged in a direction perpendicular to the extension direction of the window partition bar, the sizes between the adjacent split screen windows are changed according to the drag distance, and the size of other split-screen windows on the display screen is adjusted accordingly.

Here, when there are one or more window partition bars, the fourth operation acting on any one of window partition bars can exit the split-screen display mode and display the second target interface in full screen on the display screen.

In embodiments of the present invention, the exit of the split-screen display mode can be controlled as a whole by the fourth operation acting on the window partition bar between the adjacent split screen windows, improving the convenience of operation.

In some embodiments, displaying the second target interface in full screen on the display screen, in response to the fourth operation acting on the window partition bar between the first split screen window and the second split screen window includes: exiting split-screen display and displaying a full-screen desktop interface on the display screen, in response to the fourth operation acting on the window partition bar; or exiting split-screen display and displaying a second task presentation interface in full screen on the display screen, in response to the fourth operation acting on the window partition bar; or exiting split-screen display and displaying a fourth application interface in full screen on the display screen, in response to the fourth operation acting on the window partition bar, in which the fourth application interface is an interface of an application program running in the background of the electronic apparatus.

Here, the second target interface can be the full-screen display interface of the first target interface. For example, the second target interface can be the full-screen desktop interface, the second task presentation interface, or the interface of the application program running in the background of the electronic apparatus.

In some embodiments, the fourth operation corresponding to the full-screen desktop interface includes: a sliding operation of taking the window partition bar as a starting point and sliding for a fourth preset duration or by a fourth preset distance along an extension direction of the window partition bar.

Here, users can take any position on the window partition bar as the starting point and slide along the extension direction of the window partition bar. The fourth preset distance or the fourth preset duration can be preset by developers or can be set by users on the setting interface according to usage habits. Here, the fourth preset distance can be the same or different from the first preset distance, the second preset distance and the third preset distance. Correspondingly, the fourth preset duration can be the same or different from the first preset duration, the second preset duration and the third preset duration.

According to the present invention, the fourth preset distance is less than the length of the window partition bar acted. In some embodiments, the fourth preset distance is half of the length of the window partition bar. The fourth preset duration can be 1s, which is not limited in the present invention.

It should be noted that the fourth operation corresponding to the full-screen desktop interface is revoked after sliding the fourth preset distance or sliding the fourth preset duration, i.e., the user's fingers leave the display screen.

Referring to Fig. 11a and Fig. 11b, Fig. 11a is a third schematic interface diagram of adjusting a display screen to display a full-screen desktop interface according to an embodiment of the present invention; Fig. 11b is a fourth schematic interface diagram of adjusting a display screen to display a full-screen desktop interface according to an embodiment of the present invention.

As shown in Fig. 11a and Fig. 11b, if the fourth operation is to take one end of the window partition bar between the first split screen window and the second split screen window as the starting point and slide by 3 cm towards the extension direction of the window partition bar, the split-screen display mode is exited and the full-screen desktop interface is displayed in full screen on the display screen.

The present invention controls the exit of the split-screen display mode as a whole and return to the desktop through a shortcut operation on the window partition bar between the adjacent split screen windows, improving the convenience of operation.

In some embodiments, the fourth operation corresponding to the second task presentation interface includes: a sliding operation of taking the window partition bar as a starting point, sliding by a fifth preset distance or for a fifth preset duration along an extension direction of the window partition bar and staying at a position after sliding for a second stay duration.

Here, users can take any position on the window partition bar as the starting point and slide along the extension direction of the window partition bar. The fifth preset distance or the fifth preset duration can be preset by developers or can be set by users on the setting interface according to usage habits. Here, the fifth preset distance can be the same or different from the first preset distance, the second preset distance, the third preset distance and the fourth preset distance. Correspondingly, the fifth preset duration can be the same or different from the first preset duration, the second preset duration, the third preset duration and the fourth preset duration.

According to the present invention, the fifth preset distance is less than the length of the window partition bar acted. In some embodiments, the fifth preset distance is half of the length of the window partition bar, can also be a specified distance such as 3 cm. The fourth preset duration can be 1s, which is not limited in the present invention. Here, the second stay duration can be the same or different from the first stay duration. For example, the second stay duration is 0.5s.

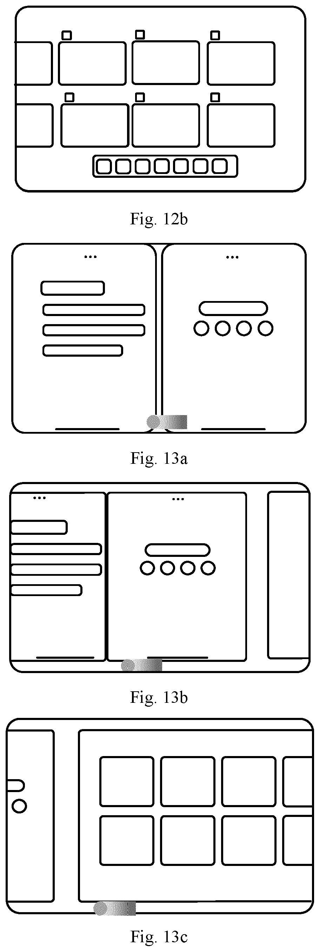

Referring to Fig. 12a and Fig. 12b, Fig. 12a is a first schematic interface diagram of adjusting a display screen to display a second task presentation interface in full screen according to an embodiment of the present invention; Fig. 12b is a second schematic interface diagram of adjusting a display screen to display a second task presentation interface in full screen according to an embodiment of the present invention.

As shown in Fig. 12a and Fig. 12b, if the fourth operation is to take one end of the window partition bar between the first split screen window and the second split screen window as the starting point, slide 3 cm towards the extension direction of the window partition bar and stay on the display screen for 0.5s, the split-screen display mode is exited and the second task presentation interface is displayed in full screen on the display screen.

Here, the second task presentation interface is a presentation interface including a thumbnail window of at least one application program running in the background of the electronic apparatus. Here, each thumbnail window corresponds to an application program running in the background, and the content in the thumbnail window is a screenshot interface of the application at the time of exiting the foreground. Here, a plurality of thumbnail windows are arranged in the timestamp order of corresponding application programs exiting the foreground.

The present invention controls the exit of the split-screen display mode as a whole and enter the recent task interface through a shortcut operation on the window partition bar between the adjacent split screen windows, improving the convenience of operation.

In some embodiments, the fourth operation corresponding to the fourth application interface includes: a sliding operation of taking an end of the window partition bar as a starting point and sliding by a sixth preset distance or for a sixth preset duration along a side edge intersecting with the window partition bar in the display screen.

Here, users can take one end of the window partition bar (which can be the top or bottom) as the starting point and slide along the side edge that intersects with the window partition bar. It is possible to drag the end of the window partition bar to slide left or right. It should be noted that when the end of the window partition bar is dragged to the left, an application interface of an application program recently exited and running in the background is called. When wanting to return to the previous split-screen interface within a preset waiting time after sliding to the left, it can be achieved by right sliding the window partition bar, so that a convenient and efficient application fast switching can be achieved.

In the present invention, the sixth preset distance or the sixth preset duration can be preset by developers or can be set by users on the setting interface according to usage habits. Here, the sixth preset distance can be the same or different from the first preset distance, the second preset distance, the third preset distance, the fourth preset distance and the fifth preset distance. Correspondingly, the fifth preset duration can be the same or different from the first preset duration, the second preset duration, the third preset duration, the fourth preset duration, and the fifth preset duration.

According to the present invention, the sixth preset distance is less than the length of the side edge that intersects with the window partition bar. In some embodiments, the sixth preset distance is half of the length of the side edge, and can also be a specified distance such as 4 cm. The fourth preset duration can be 1s or 0.8s, which is not limited in the present invention.

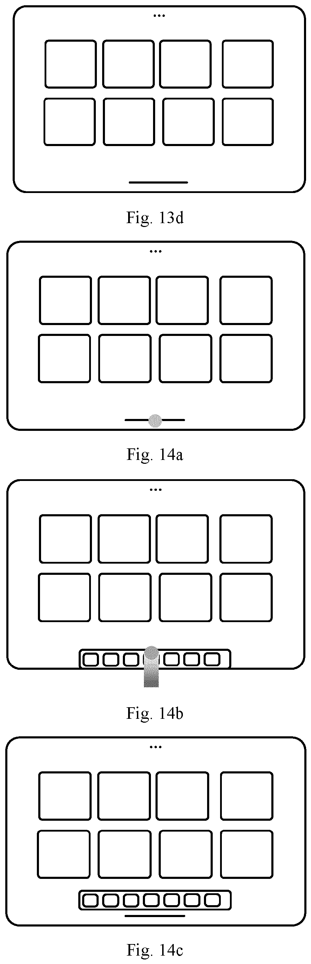

Referring to Fig. 13a and Fig. 13d, Fig. 13a is a first schematic interface diagram of adjusting a display screen to display an interface of an application program running in the background of an electronic apparatus in full screen according to an embodiment of the present invention; Fig. 13b is a second schematic interface diagram of adjusting a display screen to display an interface of an application program running in the background of an electronic apparatus in full screen according to an embodiment of the present invention; Fig. 13c is a third schematic interface diagram of adjusting a display screen to display an interface of an application program running in the background of an electronic apparatus in full screen; Fig. 13d is a fourth schematic interface diagram of adjusting a display screen to display an interface of an application program running in the background of an electronic apparatus in full screen.

As shown in Fig. 13a and Fig. 13d, if the fourth operation is to take one end of the window partition bar between the first split screen window and the second split screen window as the starting point and slide 5 cm along the direction of the side edge that intersects with the window partition bar, the split-screen display mode is exited at this time and the interface of the application programs running in the background of the electronic apparatus is displayed in full screen on the display screen.

Here, when there are a plurality of application programs running in the background, the second target interface switched is an application interface of the recently used background application programs. When two application interfaces in split screen display are both recently exited, the split-screen display mode is activated again, and the application interfaces of two corresponding application programs are displayed in the two split screen windows.

The present invention controls the exit of the split-screen display mode as a whole and quick switching of application programs through a shortcut operation on the window partition bar between the adjacent split screen windows, improving the convenience of operation and enhancing user experience.

In embodiments of the present invention, the display screen will hide a mobile shortcut application icon bar on one side edge, such as the bottom. It can respond to a user's shortcut operation to floatingly displaying the shortcut application icon bar on the display screen.

Referring to Fig. 14a to Fig. 14c, Fig. 14a is a first schematic interface diagram of floatingly displaying a shortcut application icon bar according to an embodiment of the present invention; Fig. 14b is a second schematic interface diagram of floatingly displaying a shortcut application icon bar according to an embodiment of the present invention; Fig. 14c is a third schematic interface diagram of floatingly displaying a shortcut application icon bar according to an embodiment of the present invention.

In some embodiments, the screen splitting method further includes: floatingly displaying a shortcut application icon bar on the display screen, in response to a fifth operation acting on a window partition bar between the first split screen window and the second split screen window, in which the shortcut application icon bar covers at least a portion of the first split screen window and/or at least a portion of the second split screen window.

Here, there are a plurality of icons are displayed in the floating display shortcut application bar, and each of icon can mark an application. When an icon is clicked, the application program corresponding to the icon can be quickly activated.

In some embodiments, the fifth operation includes: a sliding operation of taking an end of the window partition bar as a starting point and sliding by a seventh preset distance or for a seventh preset duration along an extension direction of the window partition bar.

Here, users can take the end of the window partition bar as the starting point and slide along the extension direction of the window partition bar. The seventh preset distance or the seventh preset duration can be preset by developers or can be set by users on the setting interface according to usage habits. Here, the seventh preset distance is less than the fourth preset distance and also less than the fifth preset distance. The seventh preset duration is less than the fourth preset duration and also less than the fifth preset duration.

In the present invention, the seventh preset distance is less than the length of the window partition bar acted. In some embodiments, the seventh preset distance is 1/5 of the length of the window partition bar, and the fourth preset duration can be 0.2s, which is not limited in the present invention.

It should be noted that the fifth operation corresponding to the full-screen desktop interface is revoked after sliding the seventh preset distance or sliding the seventh preset duration, i.e., the user's fingers leave the display screen.

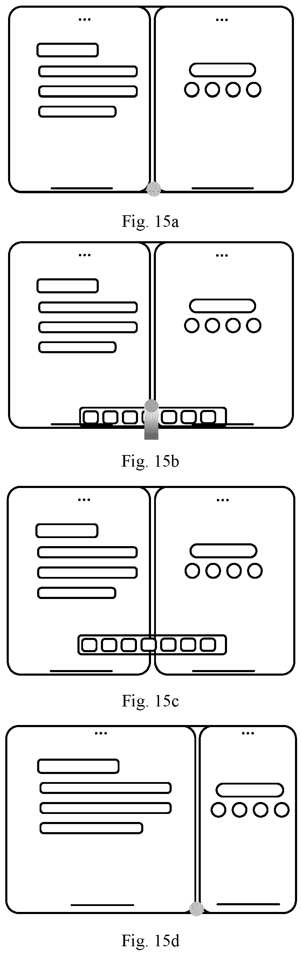

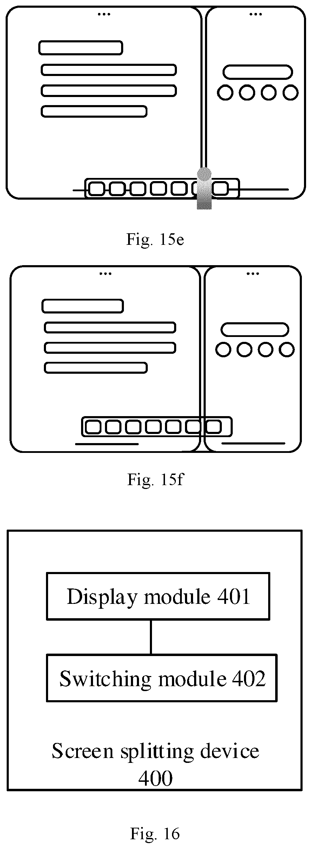

In the present invention, users can perform the fifth operation on the window partition bar in various display ratios. Referring to Fig. 15a to Fig. 15f, Fig. 15a is a first schematic interface diagram of floatingly displaying a shortcut application icon bar in a split-screen display mode according to an embodiment of the present invention; Fig. 15b is a second schematic interface diagram of floatingly displaying a shortcut application icon bar in a split-screen display mode according to an embodiment of the present invention; Fig. 15c is a third schematic interface diagram of floatingly displaying a shortcut application icon bar in a split-screen display mode according to an embodiment of the present invention; Fig. 15d is a fourth schematic interface diagram of floatingly displaying a shortcut application icon bar in a split-screen display mode according to an embodiment of the present invention; Fig. 15e is a fifth schematic interface diagram of floatingly displaying a shortcut application icon bar in a split-screen display mode according to an embodiment of the present invention; Fig. 15f is a sixth schematic interface diagram of floatingly displaying a shortcut application icon bar in a split-screen display mode according to an embodiment of the present invention.

As shown in Fig. 15a to Fig. 15f, when the display apparatus activates the split-screen display mode and the first split screen window and the second split screen window are displayed in a display ratio of 1:1 or in a ratio of 2:1, the bottom endpoint of the window partition bar between the first split screen window and the second split screen window can be used as the starting point to slide away from the bottom of the display screen, and the mobile shortcut application icon bar is floatingly displayed at the bottom of the display screen and covers a portion of the first split screen window and the second split screen window.

Embodiments of the present disclosed can trigger the quick call of the shortcut application icon bar in both full-screen display mode and the split-screen display mode, facilitating subsequent use of the shortcut application icon bar.

Referring to Fig. 16, Fig. 16 is a schematic diagram of a screen splitting device 400 according to an embodiment of the present invention. As shown in Fig. 16, the screen splitting device 400 includes: a display module 401 configured to display a plurality of split screen windows on a display screen of an electronic apparatus, in which the plurality of split screen windows includes a first split screen window and a second split screen window; and a switching module 402 configured to switch a first application interface displayed in the first split screen window to a first target interface in response to a first operation acting on the first split screen window, and maintain display of a second application interface in the second split screen window, in which the first target interface is different from an interface in an application program corresponding to the first application interface.

In some embodiments, the switching module 402 is further configured to: switch the first application interface displayed in the first split screen window to a split-screen desktop interface in response to the first operation acting on the first split screen window, in which the split-screen desktop interface includes icons of a plurality of application programs in the electronic apparatus; or switch the first application interface displayed in the first split screen window to a first task presentation interface in response to the first operation acting on the first split screen window, in which the first task presentation interface is a presentation interface including a thumbnail window of at least one application program running in the background of the electronic apparatus; or switch the first application interface displayed in the first split screen window to a third application interface in response to the first operation acting on the first split screen window, in which the third application interface is an interface of the application program running in the background of the electronic apparatus.

In some embodiments, the first operation corresponding to the split-screen desktop interface includes: a sliding operation of taking a navigation bar displayed in the first split screen window as a starting point and sliding by a first preset distance or for a first preset duration toward a direction away from the navigation bar on the first split screen window.

In some embodiments, the first operation corresponding to the first task presentation interface includes: a sliding operation of taking a navigation bar displayed in the first split screen window as a starting point, sliding by a second preset distance or for a second preset duration toward a direction away from the navigation bar on the first split screen window and staying at a position after sliding for a preset first stay duration.

In some embodiments, the first operation corresponding to the third application interface includes: a sliding operation of taking a navigation bar displayed in the first split screen window as a starting point and sliding by a third preset distance or for a third preset duration along an extension direction of the navigation bar on the first split screen window.

In some embodiments, the split screen device 400 further includes: an adjustment module (not shown in Fig. 16) configured to adjust a full-screen desktop interface displayed on the display screen to obtain the split-screen desktop interface.

In some embodiments, the adjustment module is further configured to: adjust a size of the full-screen desktop interface based on a size of the first split screen window to obtain the split-screen desktop interface, in case that the first split screen window and the second split screen window are distributed on the display screen in a target display ratio; or adjust the first split screen window and the second split screen window based on the target display ratio, and adjust the full-screen desktop interface based on the size of the adjusted first split screen window to obtain the split-screen desktop interface, in case that the first split screen window and the second split screen window are not distributed on the display screen in the target display ratio.

In some embodiments, the display module 401 is further configured to exit split-screen display and displaying the first target interface in full screen on the display screen in response to a second operation acting on the second split screen window, in which the first target interface includes a split-screen desktop interface or a first task presentation interface.

In some embodiments, the switching module 402 is further configured to: switch the first target interface displayed in the first-split window to an application interface corresponding to an icon in the first target interface, in response to a third operation acting on the icon; or switch the first target interface displayed in the first-split window to an application interface corresponding to a thumbnail window in the first target interface, in response to a third operation acting on the thumbnail window.

In some embodiments, the display module 401 is further configured to display a second target interface in full screen on the display screen, in response to a fourth operation acting on a window partition bar between the first split screen window and the second split screen window.

In some embodiments, the display module 401 is further configured to: exit split-screen display and display a full-screen desktop interface on the display screen, in response to the fourth operation acting on the window partition bar; or exit split-screen display and display a second task presentation interface in full screen on the display screen, in response to the fourth operation acting on the window partition bar; or exit split-screen display and display a fourth application interface in full screen on the display screen, in response to the fourth operation acting on the window partition bar, in which the fourth application interface is an interface of an application program running in the background of the electronic apparatus.

In some embodiments, the fourth operation corresponding to the full-screen desktop interface includes: a sliding operation of taking the window partition bar as a starting point and sliding for a fourth preset duration or by a fourth preset distance along an extension direction of the window partition bar.

In some embodiments, the fourth operation corresponding to the second task presentation interface includes: a sliding operation of taking the window partition bar as a starting point, sliding by a fifth preset distance or for a fifth preset duration along an extension direction of the window partition bar and staying at a position after sliding for a second stay duration.

In some embodiments, the fourth operation corresponding to the fourth application interface includes: a sliding operation of taking an end of the window partition bar as a starting point and sliding by a sixth preset distance or for a sixth preset duration along a side edge intersecting with the window partition bar in the display screen.

In some embodiments, the display module 401 is further configured to floatingly display a shortcut application icon bar on the display screen, in response to a fifth operation acting on a window partition bar between the first split screen window and the second split screen window, in which the shortcut application icon bar covers at least a portion of the first split screen window and/or at least a portion of the second split screen window.

In some embodiments, the fifth operation includes: a sliding operation of taking an end of the window partition bar as a starting point and sliding by a seventh preset distance or for a seventh preset duration along an extension direction of the window partition bar.

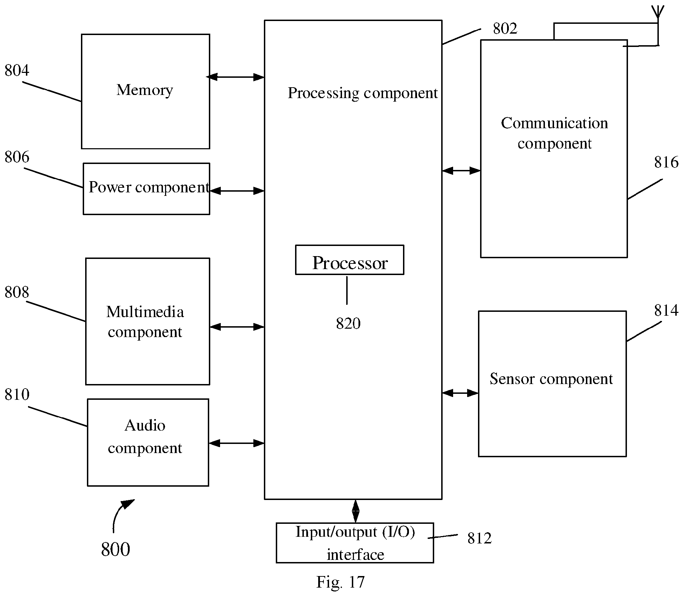

Fig. 17 is a block diagram of an electronic apparatus according to an embodiment of the present invention. Referring to Fig. 17, the electronic apparatus 800 can include one or more of following components: a processing component 802, a memory 804, a power component 806, a multimedia component 808, an audio component 810, an input/output (I/O) interface 812, a sensor component 814 and a communication component 816.

The processing component 802 typically controls the overall operation of the electronic apparatus 800, such as operations associated with display, telephone calls, data communication, camera operations, and recording operations. The processing component 802 can include one or more processors 820 to execute instructions to complete all or part of the steps of the above method. In addition, the processing component 802 can include one or more modules to facilitate the interaction between the processing component 802 and other components. For example, the processing component 802 can include a multimedia module to facilitate interaction between the multimedia component 808 and the processing component 802.

The memory 804 is configured to store various types of data to support operations on the apparatus 800. Examples of these data include instructions for any application program or method operated on the electronic apparatus 800, contact data, phone book data, messages, images, videos, etc. The memory 804 can be implemented by any type of volatile or non-volatile storage apparatus or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component 806 provides power to various components of the electronic apparatus 800. The power component 806 can include a power management system, at least one power supply, and other components associated with generating, managing, and distributing power for the electronic apparatus 800.

The multimedia component 808 includes a screen providing an output interface between the electronic apparatus 800 and a user. In some embodiments, the screen can include a liquid crystal display (LCD) and a touch panel (TP). If the screen includes the touch panel, the screen can be implemented as a touch screen to receive input signals from the user. The touch panel includes at least one touch sensor to sense touches, slides and gestures on the touch panel. The touch sensor can not only sense the boundaries of the touch or slide action, but also detect the wake-up time and pressure associated with the touch or slide operation. In some embodiments, the multimedia component 808 includes a front camera and/or a rear camera. The front camera and/or the rear camera can receive external multimedia data when the electronic apparatus 800 is in an operating mode, such as a shooting mode or a video mode. Each front camera and rear camera can be a fixed optical lens system or have a focal length and an optical zoom capability.

The audio component 810 is configured to output and/or input audio signals. For example, the audio component 810 includes a microphone (MIC) that is configured to receive external audio signals when the electronic apparatus 800 is in the operating mode, such as a call mode, a recording mode, and a speech recognition mode. The received audio signals can be further stored in the memory 804 or transmitted through the communication component 816. In some embodiments, the audio component 810 further includes a speaker for outputting the audio signals.

The Input/output (I/O) interface 812 provides an interface between the processing component 802 and a peripheral interface module, the peripheral interface module can be a keypad, a click wheel, a button, and the like. These buttons can include, but are not limited to, a home button, a volume button, a start button, and a lock button.

The sensor component 814 includes at least one sensor for providing state assessments of various aspects for the electronic apparatus 800. For example, the sensor component 814 can detect the on/off state of the apparatus 800, the relative positioning of components, such as a display and a keypad of the electronic apparatus 800. The sensor component 814 can also detect the position change of the electronic apparatus 800 or a component of the electronic apparatus 800, the presence or absence of user contact with the electronic apparatus 800, the orientation or acceleration/deceleration of the electronic apparatus 800 and the temperature change of the electronic apparatus 800. The sensor component 814 can include a proximity sensor configured to detect the presence of a nearby object without any physical contact. The sensor component 814 can also include an optical sensor, such as a CMOS or CCD image sensor, for use in imaging applications. In some embodiments, the sensor component 814 can also include an acceleration sensor, a gyroscope sensor, a magnetic sensor, a pressure sensor, or a temperature sensor.

The communication component 816 is configured to facilitate wired or wireless communication between the electronic apparatus 800 and other apparatuses. The electronic apparatus 800 can access to a wireless network based on a communication standard, such as Wi-Fi, 2G or 3G, or a combination thereof. In an embodiment, the communication component 816 receives broadcast signals or broadcast-related information from an external broadcast management system via a broadcast channel. In an embodiment, the communication component 816 further includes a near field communication (NFC) module to facilitate short range communication. For example, NFC modules can be implemented based on Radio Frequency Identification (RFID) technology, Infrared Data Association (IrDA) technology, Ultra-Wide Band (UWB) technology, Bluetooth (BT) technology and other technologies.

In an embodiment, the electronic apparatus 800 can be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic element, for executing the above methods.

In embodiments of the present invention, there is also provided a non-transitory computer-readable storage medium including instructions, such as the memory 804 including instructions, the instructions can be executed by the processor 820 of the electronic apparatus 800 to complete the above methods. For example, the non-transitory computer-readable storage medium can be a ROM, a random access memory (RAM), a CD-ROM, a magnetic tape, a floppy disk, and an optical data storage apparatus, etc.

For the non-transitory computer-readable storage medium according to the present invention, when instructions in the storage medium are executed by a processor of an electronic apparatus, the electronic apparatus can execute the screen splitting method according to the present invention.

It should be understood that the present invention is not limited to the precise structures described above and shown in the drawings, and various modifications and changes can be made without departing from its scope. The scope of the present invention is limited only by the scope of the appended claims.

## Claims

1. A screen splitting method, comprising:
displaying a plurality of split screen windows on a display screen of an electronic apparatus (S301), wherein the plurality of split screen windows comprises a first split screen window and a second split screen window; and
switching a first application interface displayed in the first split screen window to a first target interface in response to a first operation acting on the first split screen window, and maintaining display of a second application interface in the second split screen window (S302),
wherein the first target interface is different from an interface in an application program corresponding to the first application interface.

2. The screen splitting method according to claim 1, wherein switching the first application interface displayed in the first split screen window to the first target interface in response to the first operation acting on the first split screen window comprises:
switching the first application interface displayed in the first split screen window to a split-screen desktop interface in response to the first operation acting on the first split screen window, wherein the split-screen desktop interface comprises icons of a plurality of application programs in the electronic apparatus; or
switching the first application interface displayed in the first split screen window to a first task presentation interface in response to the first operation acting on the first split screen window, wherein the first task presentation interface is a presentation interface comprising a thumbnail window of at least one application program running in the background of the electronic apparatus; or
switching the first application interface displayed in the first split screen window to a third application interface in response to the first operation acting on the first split screen window, wherein the third application interface is an interface of the application program running in the background of the electronic apparatus.

3. The screen splitting method according to claim 2, wherein the first operation corresponding to the split-screen desktop interface comprises: a sliding operation of taking a navigation bar displayed in the first split screen window as a starting point and sliding by a first preset distance or for a first preset duration toward a direction away from the navigation bar on the first split screen window.

4. The screen splitting method according to claim 2, wherein the first operation corresponding to the first task presentation interface comprises: a sliding operation of taking a navigation bar displayed in the first split screen window as a starting point, sliding by a second preset distance or for a second preset duration toward a direction away from the navigation bar on the first split screen window and staying at a position after sliding for a preset first stay duration.

5. The screen splitting method according to claim 2, wherein the first operation corresponding to the third application interface comprises: a sliding operation of taking a navigation bar displayed in the first split screen window as a starting point and sliding by a third preset distance or for a third preset duration along an extension direction of the navigation bar on the first split screen window.

6. The screen splitting method according to any one of claims 2-5, further comprising: adjusting a full-screen desktop interface displayed on the display screen to obtain the split-screen desktop interface,
optionally, wherein adjusting the full-screen desktop interface displayed on the display screen to obtain the split-screen desktop interface comprises:
adjusting a size of the full-screen desktop interface based on a size of the first split screen window to obtain the split-screen desktop interface, in case that the first split screen window and the second split screen window are distributed on the display screen in a target display ratio; or
adjusting the first split screen window and the second split screen window based on the target display ratio, and adjusting the full-screen desktop interface based on the size of the adjusted first split screen window to obtain the split-screen desktop interface, in case that the first split screen window and the second split screen window are not distributed on the display screen in the target display ratio.

7. The screen splitting method according to any one of claims 1-6, further comprising:
exiting split-screen display and displaying the first target interface in full screen on the display screen in response to a second operation acting on the second split screen window, wherein the first target interface comprises a split-screen desktop interface or a first task presentation interface.

8. The screen splitting method according to any one of claims 1-6, further comprising:
switching the first target interface displayed in the first-split window to an application interface corresponding to an icon in the first target interface, in response to a third operation acting on the icon; or
switching the first target interface displayed in the first-split window to an application interface corresponding to a thumbnail window in the first target interface, in response to a third operation acting on the thumbnail window.

9. The screen splitting method according to any one of claims 1-6, further comprising:
displaying a second target interface in full screen on the display screen, in response to a fourth operation acting on a window partition bar between the first split screen window and the second split screen window.

10. The screen splitting method according to claim 9, wherein displaying the second target interface in full screen on the display screen, in response to the fourth operation acting on the window partition bar between the first split screen window and the second split screen window comprises:
exiting split-screen display and displaying a full-screen desktop interface on the display screen, in response to the fourth operation acting on the window partition bar; or
exiting split-screen display and displaying a second task presentation interface in full screen on the display screen, in response to the fourth operation acting on the window partition bar; or
exiting split-screen display and displaying a fourth application interface in full screen on the display screen, in response to the fourth operation acting on the window partition bar, wherein the fourth application interface is an interface of an application program running in the background of the electronic apparatus.

11. The screen splitting method according to claim 10, wherein the fourth operation corresponding to the full-screen desktop interface comprises: a sliding operation of taking the window partition bar as a starting point and sliding for a fourth preset duration or by a fourth preset distance along an extension direction of the window partition bar.

12. The screen splitting method according to claim 10, wherein the fourth operation corresponding to the second task presentation interface comprises: a sliding operation of taking the window partition bar as a starting point, sliding by a fifth preset distance or for a fifth preset duration along an extension direction of the window partition bar and staying at a position after sliding for a second stay duration.

13. The screen splitting method according to claim 10, wherein the fourth operation corresponding to the fourth application interface comprises: a sliding operation of taking an end of the window partition bar as a starting point and sliding by a sixth preset distance or for a sixth preset duration along a side edge intersecting with the window partition bar in the display screen.

14. The screen splitting method according to any one of claims 1-13, further comprising:
floatingly displaying a shortcut application icon bar on the display screen, in response to a fifth operation acting on a window partition bar between the first split screen window and the second split screen window,
wherein the shortcut application icon bar covers at least a portion of the first split screen window and/or at least a portion of the second split screen window,
optionally, wherein the fifth operation comprises: a sliding operation of taking an end of the window partition bar as a starting point and sliding by a seventh preset distance or for a seventh preset duration along an extension direction of the window partition bar.

15. An electronic apparatus, comprising:
a processor; and
a memory for storing instructions executable by the processor;
wherein the processor is configured to execute the instructions to execute the screen splitting method according to any one of claims 1-14.
